# EUROPÄISCHE PATENTSCHRIFT

(11) **EP 4 562 662 B1**
(45) Veröffentlichungstag und Bekanntmachung des Hinweises auf die Patenterteilung: **08.07.2026**
(21) Anmeldenummer: 23771768.1
(22) Anmeldetag: 21.07.2023
(51) Int. Cl.: H01G 4/224, H01G 2/10, H01G 11/78, H01M 50/126, B32B 15/01, H01M 50/107, H01M 50/119, H01M 50/14

(54) **GEHÄUSE FÜR EIN ELEKTRONISCHES ELEMENT, VORZUGSWEISE EINE BATTERIEZELLE ODER EIN KONDENSATOR**
HOUSING FOR AN ELECTRONIC ELEMENT, PREFERABLY A BATTERY CELL OR A CAPACITOR
BOÎTIER POUR UN ÉLÉMENT ÉLECTRONIQUE, DE PRÉFÉRENCE UNE CELLULE DE BATTERIE OU UN CONDENSATEUR

(30) Priorität: 25.07.2022 DE 202022104195 U
(43) Veröffentlichungstag der Anmeldung: 04.06.2025
(73) Patentinhaber: Wickeder Westfalenstahl GmbH, 58739 Wickede (Ruhr) (DE)
(72) Erfinder: FRANKEN, Carina, 59823 Arnsberg (DE); MÜCKE, Christian, 59368 Werne (DE)
(74) Vertreter: Cohausz & Florack
(86) Internationale Anmeldenummer: PCT/EP2023/070274
(87) Internationale Veröffentlichungsnummer: WO 2024/022971

(56) Entgegenhaltungen:
- EP-A1- 0 884 402
- WO-A1-2010/113549
- JP-A- 2001 313 008
- US-A1- 2022 216 548

## Beschreibung

Die Erfindung betrifft ein Gehäuse für ein elektronisches Element, vorzugsweise eine Batteriezelle oder ein Kondensator, mit einem zylinderförmigen Abschnitt und mit einem an einer Seite des zylinderförmigen Abschnitts angeordneten Boden, wobei der zylinderförmige Abschnitt und der Boden einstückig ausgebildet sind, wobei der zylinderförmige Abschnitt und der Boden aus einem plattierten Metallblech besteht und wobei das Metallblech mindestens eine Schicht aus Aluminium und mindestens eine Schicht aus Stahl aufweist. Insbesondere betrifft die Erfindung Gehäuse mit den Merkmalen der Oberbegriffe der Ansprüche 1 und 2.

Derartige Gehäuse finden in der Elektroindustrie breiten Einsatz, insbesondere für die Elektrifizierung von Fahrzeugen werden Batteriezellgehäuse, vorzugsweise für Rundzellen, eingesetzt. Die Gehäuse können aus unterschiedlichen Materialien bzw. Metallen hergestellt werden, vorzugsweise aus Aluminium oder aus Stahl, vorzugsweise galvanisch veredeltem Stahl eingesetzt.

Aluminium hat aufgrund des geringen Gewichts einen Vorteil.

Stahl hat hingegen aufgrund der geringen Herstellungskosten und der höheren Festigkeit und des damit verbundenen Schutzes gegen Durchbrennen (sog. "thermal runaway") und gegen mechanische- sowie Druckbelastungen Vorteile.

Die WO 2010/113549 A1 beschreibt eine Sekundärbatterie, die aus einer Metallverbundschicht mittels Galvanisieren hergestellt ist.

Die JP 2001 313008 A beschreibt die Herstellung eines Batteriegehäuses aus einer Metallverbundschicht.

Daher liegt der vorliegenden Erfindung das technische Problem zugrunde, die eingangs genannten Gehäuse weiter zu verbessern.

Das zuvor aufgeführte technische Problem wird erfindungsgemäß gemäß einer ersten Lehre dadurch gelöst, dass das Metallblech einen Schichtaufbau aus zwei Schichten aus Aluminium und einer dazwischen angeordneten Schicht aus Stahl aufweist und dass die beiden Schichten aus Aluminium jeweils eine Schichtdicke von 40% +/- 10%, insbesondere +/- 5%, der Gesamtdicke des Metallblechs und die Schicht aus Stahl eine Schichtdicke von 20% +/- 10%, insbesondere +/- 5%, der Gesamtdicke des Metallblechs aufweisen. Unter Stahl wird Eisen und dessen Legierungen verstanden, die alle Stahlgüten einschließlich Inox umfassen.

Weiterhin wird das zuvor aufgeführte technische Problem erfindungsgemäß gemäß einer zweiten Lehre dadurch gelöst, dass das Metallblech einen Schichtaufbau aus einer Schicht aus Aluminium, einer Schicht aus Stahl und einer Schicht aus Nickel oder einer Zink enthaltenden Schicht aufweist, und dass die Schicht aus Aluminium eine Schichtdicke von 75% +/- 5% oder +/-4% der Gesamtdicke des Metallblechs, die Schicht aus Stahl eine Schichtdicke von 20% +/- 5% oder +/-4% der Gesamtdicke des Metallblechs und die Schicht aus Nickel oder die Zink enthaltenden Schicht eine Schichtdicke von 5% +/- 5% oder +/-4% der Gesamtdicke des Metallblechs aufweisen.

Wenn das elektronische Element als Batteriezelle ausgebildet ist, können die Batteriezellen unterschiedliche Dicken aufweisen. Beispielsweise sind sogenannte Pouchzellen zum Teil nur 50 bis 150 µm dick. während andere Batteriezellen Abmessungen im Bereich von Millimetern oder Zentimetern aufweisen. Somit kann die Wandstärke des Gehäuses an die Dicke der Batteriezelle angepasst werden. Allgemein können für elektronische Bauteile mit kleinen Abmessungen Gehäuse mit dünnen Wandstärke eingesetzt werden.

In bevorzugter Weise kann der zylindrische Abschnitt mit unterschiedlichen Grundflächen als Boden ausgebildet sein, wobei der Boden eine runde, mehreckig prismatische oder rechteckige Fläche aufweisen kann. Der Begriff des Zylinders ist also breit zu verstehen und nicht nur auf Zylinder mit kreisförmiger Bodenfläche beschränkt.

Gemäß einer nicht zur Erfindung gehörenden Ausführungsform weist das Metallblech mindestens eine Schicht aus Nickel auf, wobei vorzugsweise das Metallblech mindestens zwei äußere Schichten aus Nickel aufweist.

Alternativ, gemäß einer weiteren nicht zur Erfindung gehörenden Ausführungsform, kann das Metallblech mindestens eine Schicht aus Zink oder aus einer Zinklegierung, insbesondere einer bleifreien Zinklegierung, aufweisen, wobei vorzugsweise das Metallblech mindestens zwei äußere Schichten aus Zink oder aus einer Zinklegierung, insbesondere einer bleifreien Zinklegierung, aufweist. Zink hat den Vorteil, dass eine äußere Zink enthaltende Schicht kalt verlötet werden kann.

Die Anzahl der Schichten aus einem jeweiligen Metall und deren Anordnung innerhalb des Schichtaufbaus ist grundsätzlich frei wählbar.

Unter Plattieren wird im Rahmen dieser Beschreibung eine Verbindung durch Adhäsionsbindung mit atomarer Diffusion verstanden, also ein Verbund zwischen zwei Bindungspartnern verstanden, bei dem sich durch atomare Diffusion der Materialien der Bindungspartner eine Übergangsschicht als Bindungszone ausbildet, über die eine kontinuierliche Anpassung der Materialeigenschaften stattfindet. Die Adhäsionsbindung mit atomarer Diffusion entsteht also durch die Ausbildung der Übergangsschicht zwischen den Lagen.

In der Übergangsschicht sind die Atome der Bindungspartner graduell vermischt, die Bildung eines Verbunds erfolgt durch Platzwechselvorgänge (Diffusion) in der Übergangsschicht, auch genannt Bindungszone. Diese Übergangsschicht bewirkt die Verringerung innerer Spannungen. Die Ausdehnung der Übergangszone ist dabei abhängig von den jeweilig verwendeten Bindungspartnern, insbesondere den Diffusionseigenschaften der beteiligten Materialien.

Zur Charakterisierung der Adhäsionsbindung mit atomarer Diffusion, also der Bindungszone der Adhäsionsbindung in der Übergangsschicht, und der Eigenschaften können Analysen mittels verschiedener Methoden angewendet werden. Zu diesen Methoden gehören optische Lichtmikroskopie, Transmissionselektronenmikroskopie (TEM), Rasterelektronenmikroskopie (REM), energiedispersive Röntgenspektroskopie (EDS), Sekundärionenmassenspektrometrie (SIMS) und Analysen von Mikrohärteverläufen.

Ein solcher Verbund wird auch als Plattierverbund bezeichnet werden. Bevorzugt sind die beiden Bindungspartner metallische Werkstoffe und der Plattierverbund stellt eine metallische Verbindung der beiden Bindungspartner oder Plattierpartner dar. Die Verbindung der Bindungspartner im Plattierverbund kann mittels dem vorgenannten Plattieren erfolgen. Dazu kann das Plattieren durch Kaltwalzplattieren oder Warmplattieren durchgeführt werden.

Die Verbindung der Bindungspartner kann alternativ auch durch Schweißen von Metallpaketen, insbesondere Diffusionsschweißen oder Elektroschweißen, bzw. durch ein Paketieren und partielles Verschweißen hergestellt sein. Des Weiteren ist eine Herstellung mittels Sintern oder mittels Hot Isostatic Pressing (HIP) möglich.

Gemäß der ersten erfindungsgemäßen Lehre weist das plattierte Metallblech einen Schichtaufbau aus zwei Schichten aus Aluminium und einer dazwischen angeordneten Schicht aus Stahl auf. Die Schicht aus Stahl wird also von beiden Seiten mit einer Schicht aus Aluminium bedeckt bzw. die Schicht aus Stahl ist die Kernlage innerhalb des Schichtaufbaus.

Zudem kann das Gehäuse so ausgebildet sein, dass die beiden Schichten aus Aluminium jeweils eine Schichtdicke von weniger als 40% der Gesamtdicke des Metallblechs und die Schicht aus Stahl eine Schichtdicke von mehr als 20% der Gesamtdicke des Metallblechs aufweisen.

Gemäß der zweiten erfindungsgemäßen Lehre weist das plattierte Metallblech einen Schichtaufbau aus einer Schicht aus Aluminium, einer Schicht aus Stahl und einer Schicht aus Nickel oder einer Zink enthaltenden Schicht auf. Die drei genannten Schichten folgen aufeinander in der angegebenen Reihenfolge, die Schicht aus Stahl ist wieder die Kernschicht.

Vorzugsweise können die Schicht aus Aluminium eine Schichtdicke von ungefähr 75% der Gesamtdicke des Metallblechs, die Schicht aus Stahl eine Schichtdicke von ungefähr 20% der Gesamtdicke des Metallblechs und die Schicht aus Nickel oder die Zink enthaltende Schicht eine Schichtdicke von ungefähr 5% der Gesamtdicke des Metallblechs aufweisen. Die Abweichung der Schichtdicken kann dabei innerhalb von Grenzen +/- 5% oder +/-4% variieren.

Für alle zuvor beschriebenen Ausgestaltungen des Gehäuses gilt die bevorzugte Herstellungsweise, dass der einstückige Aufbau des Gehäuses durch Tiefziehen des Metallblechs hergestellt ist.

Im Ergebnis ergibt sich bei allen zuvor beschriebenen Ausgestaltungen ein Gehäuse, das verschiedene gewünschte Eigenschaften in sich vereint. Zum einen führt die Anwendung von Aluminium zu einem geringen spezifischen Gewicht, zum anderen führt die Anwendung von Stahl innerhalb desselben Gehäuses zu einer erhöhten Festigkeit und Korrosionsbeständigkeit.

Die beschriebene Anwendung mindestens einer Schicht aus Nickel kann aus fügetechnologischen Gründen vorteilhaft bzw. erforderlich sein.

Im Folgenden wird die Erfindung anhand von Ausführungsbeispielen mit Bezug auf die Zeichnung erläutert. In der Zeichnung zeigen
- Fig. 1: ein aus einem Metallblech nach Fig. 2 oder Fig. 3 hergestelltes Gehäuse
- Fig. 2: ein erstes erfindungsgemäßes Metallblech zur Herstellung eines Gehäuses für ein elektronisches Element, vorzugsweise eine Batteriezelle oder ein Kondensator, und
- Fig. 3: ein zweites erfindungsgemäßes Metallblech.

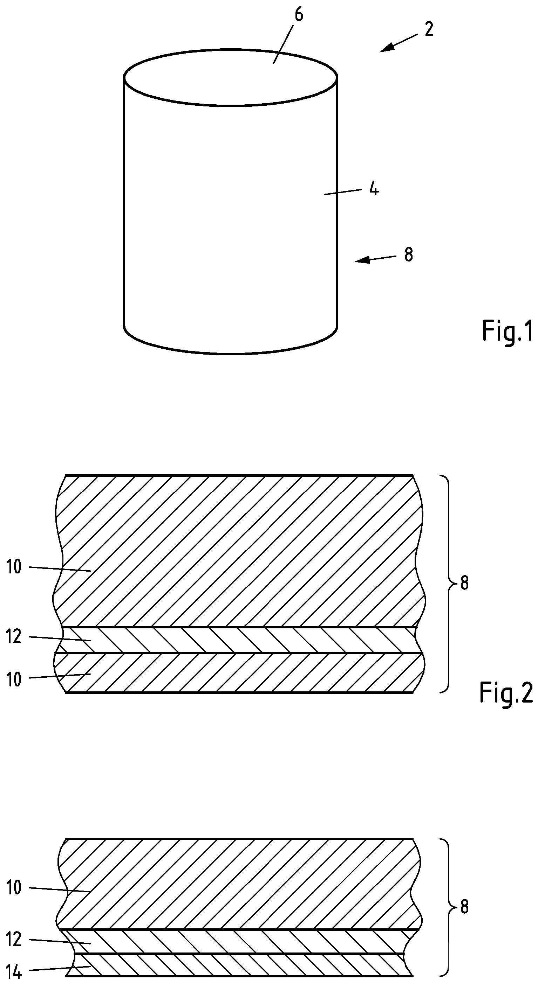

Fig. 1 zeigt ein Gehäuse 2 für ein elektronisches Element, vorzugsweise eine Batteriezelle oder ein Kondensator, mit einem zylinderförmigen Abschnitt 4 und mit einem an einer Seite des zylinderförmigen Abschnitts 4 angeordneten Boden 6. Der zylinderförmige Abschnitt 4 und der Boden 6 sind einstückig ausgebildet und beispielsweise durch Tiefziehen eines vorgefertigten Metallblechs hergestellt.

Der zylinderförmige Abschnitt 4 und der Boden 6 besteht aus einem plattierten Metallblech 8 und das Metallblech 8 weist zwei Schichten 10 aus Aluminium und eine Schicht aus Stahl 12 auf. Zudem kann das Metallblech auch mindestens eine Schicht aus Nickel 14 aufweisen. Zwei verschiedene Schichtaufbauten werden nachfolgend anhand der Fig. 2 und 3 erläutert.

Fig. 2 zeigt den Schichtaufbau eines Metallblechs 8 bestehend aus zwei Schichten 10 aus Aluminium und einer dazwischen angeordneten Schicht 12 aus Stahl. Beispielhaft weisen -die beiden Schichten 10 aus Aluminium jeweils eine Schichtdicke von ungefähr 40% der Gesamtdicke des Metallblechs 8 und die Schicht 12 aus Stahl eine Schichtdicke von ungefähr 20% der Gesamtdicke des Metallblechs 8 auf.

Fig. 3 zeigt den Schichtaufbau eines Metallblechs 8 bestehend aus einer Schicht 10 aus Aluminium, einer Schicht 12 aus Stahl und einer Schicht 14 aus Nickel aufweist. Beispielhaft weisen die Schicht 10 aus Aluminium eine Schichtdicke von ungefähr 75% der Gesamtdicke des Metallblechs 8, die Schicht 12 aus Stahl eine Schichtdicke von ungefähr 20% der Gesamtdicke des Metallblechs 8 und die Schicht 14 aus Nickel eine Schichtdicke von ungefähr 5% der Gesamtdicke des Metallblechs 8 auf.

## Patentansprüche

1. Gehäuse für ein elektronisches Element, vorzugsweise eine Batteriezelle oder ein Kondensator,
- mit einem zylinderförmigen Abschnitt (4) und
- mit einem an einer Seite des zylinderförmigen Abschnitts (4) angeordneten Boden (6),
- wobei der zylinderförmige Abschnitt (4) und der Boden (6) einstückig ausgebildet sind,
- wobei der zylinderförmige Abschnitt (4) und der Boden (6) aus einem plattierten Metallblech besteht und
- wobei das Metallblech mindestens eine Schicht (10) aus Aluminium und mindestens eine Schicht (12) aus Stahl aufweist,
**dadurch gekennzeichnet,**
- **dass** das Metallblech einen Schichtaufbau aus zwei Schichten (10) aus Aluminium und einer dazwischen angeordneten Schicht (12) aus Stahl aufweist und
**dass** die beiden Schichten (10) aus Aluminium jeweils eine Schichtdicke von 40% +/- 10%, insbesondere +/- 5%, der Gesamtdicke des Metallblechs (8) und die Schicht (12) aus Stahl eine Schichtdicke von 20% +/- 10%, insbesondere +/- 5%, der Gesamtdicke des Metallblechs (8) aufweisen.

2. Gehäuse für ein elektronisches Element, vorzugsweise eine Batteriezelle oder ein Kondensator,
- mit einem zylinderförmigen Abschnitt (4) und
- mit einem an einer Seite des zylinderförmigen Abschnitts (4) angeordneten Boden (6),
- wobei der zylinderförmige Abschnitt (4) und der Boden (6) einstückig ausgebildet sind,
- wobei der zylinderförmige Abschnitt (4) und der Boden (6) aus einem plattierten Metallblech besteht und
- wobei das Metallblech mindestens eine Schicht (10) aus Aluminium und mindestens eine Schicht (12) aus Stahl aufweist,
**dadurch gekennzeichnet,**
- **dass** das Metallblech (8) einen Schichtaufbau aus einer Schicht (10) aus Aluminium, einer Schicht (12) aus Stahl und einer Schicht (14) aus Nickel oder einer Zink enthaltenden Schicht (14) aufweist, und
- **dass** die Schicht (10) aus Aluminium eine Schichtdicke von 75% +/- 5% oder +/-4% der Gesamtdicke des Metallblechs (8), die Schicht (12) aus Stahl eine Schichtdicke von 20% +/- 5% oder +/-4% der Gesamtdicke des Metallblechs (8) und die Schicht (14) aus Nickel oder die Zink enthaltenden Schicht (14) eine Schichtdicke von 5% +/- 5% oder +/-4% der Gesamtdicke des Metallblechs (8) aufweisen.

3. Gehäuse nach Anspruch 1 oder 2,
**dadurch gekennzeichnet,**
**dass** der Boden (6) eine runde, mehreckig prismatische oder rechteckige Form aufweist.

4. Gehäuse nach Anspruch 1 oder nach Anspruch 3 abhängig von Anspruch 1, **dadurch gekennzeichnet,**
**dass** die beiden Schichten (10) aus Aluminium jeweils eine Schichtdicke von weniger als 40% der Gesamtdicke des Metallblechs (8) und die Schicht (12) aus Stahl eine Schichtdicke von mehr als 20% der Gesamtdicke des Metallblechs (8) aufweisen.

5. Gehäuse nach einem der Ansprüche 1 bis 4,
**dadurch gekennzeichnet,**
**dass** der einstückige Aufbau durch Tiefziehen des Metallblechs (8) hergestellt ist.

## Claims

1. Housing for an electronic element, preferably a battery cell or a capacitor,
- with a cylindrical section (4) and
- with a base (6) arranged on one side of the cylindrical section (4),
- wherein the cylindrical section (4) and the base (6) are formed in one piece,
- wherein the cylindrical section (4) and the base (6) consist of a clad metal sheet and
- wherein the metal sheet has at least one layer (10) of aluminium and at least one layer (12) of steel,
**characterised in that,**
- the metal sheet has a layered structure consisting of two layers (10) of aluminium and a layer (12) of steel arranged between them and
the two layers (10) of aluminium each have a layer thickness of 40% +/- 10%, in particular +/- 5%, of the total thickness of the metal sheet (8) and the layer (12) of steel has a layer thickness of 20% +/- 10%, in particular +/- 5%, of the total thickness of the metal sheet (8).

2. Housing for an electronic element, preferably a battery cell or a capacitor,
- with a cylindrical section (4) and
- with a base (6) arranged on one side of the cylindrical section (4),
- wherein the cylindrical section (4) and the base (6) are formed in one piece,
- wherein the cylindrical section (4) and the base (6) consist of a clad metal sheet
and
- wherein the metal sheet has at least one layer (10) of aluminium and at least one layer (12) of steel,
**characterised in that,**
- the metal sheet (8) has a layer structure comprising a layer (10) of aluminium, a layer (12) of steel and a layer (14) of nickel or a layer (14) containing zinc, and
- the layer (10) of aluminium has a layer thickness of 75% +/- 5% or +/-4% of the total thickness of the metal sheet (8), the layer (12) of steel has a layer thickness of 20% +/- 5% or +/-4% of the total thickness of the metal sheet (8) and the layer (14) of nickel or the zinc-containing layer (14) has a layer thickness of 5% +/- 5% or +/-4% of the total thickness of the metal sheet (8).

3. Housing according to claim 1 or 2,
**characterised in that**,
the base (6) has a round, polygonal prismatic or rectangular shape.

4. Housing according to claim 1 or claim 3 dependent on claim 1,
**characterised in that**,
the two layers (10) of aluminium each have a layer thickness of less than 40% of the total thickness of the metal sheet (8) and the layer (12) of steel has a layer thickness of more than 20% of the total thickness of the metal sheet (8).

5. Housing according to any one of claims 1 to 4,
**characterised in that**,
the one-piece structure is produced by deep-drawing the metal sheet (8).

## Revendications

1. Boîtier pour un élément électronique, de préférence une cellule de batterie ou un condensateur,
- avec une section cylindrique (4) et
- un fond (6) disposé sur un côté de la section cylindrique (4),
- dans lequel la section cylindrique (4) et le fond (6) sont conçus d'une seule pièce,
- dans lequel la section cylindrique (4) et le fond (6) sont constitués d'une tôle métallique plaquée, et
- dans lequel la tôle métallique comporte une couche (10) d'aluminium et au moins une couche (12) d'acier,
**caractérisé en ce que**
- la tôle métallique comporte une conception en couches constituée de deux couches (10) d'aluminium et d'une couche (12) d'acier disposée entre elles, et
les deux couches (10) d'aluminium présentent respectivement une épaisseur de couche de 40 % ± 10 %, en particulier ± 5 % de l'épaisseur totale de la tôle métallique (8) et la couche (12) d'acier présente une épaisseur de couche de 20 % ± 10 %, en particulier ± 5 %, de l'épaisseur totale de la tôle métallique (8).

2. Boîtier pour un élément électronique, de préférence une cellule de batterie ou un condensateur,
- avec une section cylindrique (4) et
- un fond (6) disposé sur un côté de la section cylindrique (4),
- dans lequel la section cylindrique (4) et le fond (6) sont conçus d'une seule pièce,
- dans lequel la section cylindrique (4) et le fond (6) sont constitués d'une tôle métallique plaquée, et
- dans lequel la tôle métallique comporte au moins une couche (10) d'aluminium et au moins une couche (12) d'acier,
**caractérisé en ce que**
- la tôle métallique (8) présente une structure en couche constituée d'une couche (10) d'aluminium, d'une couche (12) d'acier et d'une couche (14) de nickel ou d'une couche (14) contenant du zinc, et
- la couche (10) d'aluminium présente une épaisseur de couche de 75 % ± 5 %, où ± 4 % de l'épaisseur totale de la tôle métallique (8), la couche (12) d'acier présente une épaisseur de couche de 20 % ± 5 % ou ± 4 % de l'épaisseur totale de la tôle métallique (8) et la couche (14) de nickel ou la couche (14) contenant du zinc présente une épaisseur de couche de 5 % ± 5 % ou ± 4 % de l'épaisseur totale de la tôle métallique (8).

3. Boîtier selon la revendication 1 ou 2,
**caractérisé en ce que**
le fond (6) présente une forme ronde, prismatique polygonale ou rectangulaire.

4. Boîtier selon la revendication 1 ou la revendication 3 dépendante de la revendication 1,
**caractérisé en ce que**
les deux couches (10) d'aluminium présentent respectivement une épaisseur de couche inférieure à 40 % de l'épaisseur totale de la tôle métallique (8) et la couche (12) d'acier présente une épaisseur de couche supérieure à 20 % de l'épaisseur totale de la tôle métallique (8).

5. Boîtier selon la revendication 1 à 4,
**caractérisé en ce que**
la conception d'une seule pièce est fabriquée par emboutissage profond de la tôle métallique (8).
